Europäisches Patentamt

European Patent Office

Office européen des brevets

(11) Numéro de publication: **0 008 481**
**B1**

(12)  # FASCICULE DE BREVET EUROPEEN

(45) Date de publication du fascicule du brevet: **17.11.82**

(51) Int. Cl.³: **B 29 C 17/07**

(21) Numéro de dépôt: **79200450.9**

(22) Date de dépôt: **13.08.79**

---

(54) **Dispositif pour l'étirage à chaud de préformes en matière thermoplastique lors de leur moulage par soufflage.**

---

(30) Priorité: **24.08.78 FR 7824756**

(43) Date de publication de la demande:
**05.03.80 Bulletin 80/5**

(45) Mention de la délivrance du brevet:
**17.11.82 Bulletin 82/46**

(84) Etats contractants désignés:
**AT BE CH DE FR GB IT LU NL SE**

(56) Documents cités:
**DE - A - 2 704 657**
**FR - A - 2 098 332**
**FR - A - 2 304 461**
**FR - A - 2 323 516**

(73) Titulaire: **SOLVAY & Cie (Société Anonyme)**
**Rue du Prince Albert, 33**
**B-1050 Bruxelles (BE)**

(72) Inventeur: **Michel, Edmond**
**Marienborre, 11**
**B-1120 Bruxelles (BE)**

(74) Mandataire: **Eischen, Roland**
**Solvay & Cie Département de la Propriété**
**Industrielle Rue de Ransbeek 310**
**B-1120 Bruxelles (BE)**

---

Courier Press, Leamington Spa, England.

Dispositif pour l'étirage à chaud de préformes en matière thermoplastique
lors de leur moulage par soufflage

La présente invention concerne un dispositif pour l'étirage à chaud longitudinal de préformes en matière thermoplastique présentant un fond fermé et un col ouvert lors de leur moulage par soufflage en vue de la production de corps creux.

Actuellement, les techniques de moulage par soufflage sont très largement exploitées pour la production de corps creux en matière thermoplastique.

Selon une des techniques les plus courantes, on réalise, dans une premier stade, des préformes ayant un fond fermé et un col ouvert, puis, dans un second stade, on moule ces préformes par soufflage en vue de produire les corps creux désirés. En général, les préformes sont produites par moulage par injection ou par soufflage et ont un diamètre et une hauteur qui sont nettement inférieures au diamètre et à la hauteur des corps creux à produire. Par ailleurs, il est avantageux de soumettre ces préformes à un étirage axial, avant ou durant l'étirage final de moulage par soufflage. Un tel étirage se révèle particulièrement bénéfique lorsque les préformes ont subi un conditionnement thermique préalable approprié à produire, lors du moulage final, des corps creux orientés moléculairement. Dans ce cas, en effet, l'étirage longitudinal des préformes engendre une orientation moléculaire axiale dans ces dernières tandis que l'étirage provoqué par le soufflage final engendre une orientation moléculaire radiale. On obtient ainsi des corps creux dont les parois sont biorientées moléculairement selon des directions orthogonales et qui se caractérisent par des propriétés mécaniques exceptionnelles.

En général, l'étirage longitudinal des préformes est réalisé au moyen de tiges d'étirage qui sont introduites dans les préformes par leur col ouvert et qui exercent un effort de poussée sur leur fond fermé. La course des tiges d'étirage est calculée en général de façon à étirer longitudinalement les préformes maintenues par leur col jusqu'au moment où celles-ci atteignent une longueur qui est pratiquement égale ou légèrement inférieure à la hauteur des corps creux désirés. Etant donné que les systèmes d'entraînement hydrauliques ou pneumatiques sont incapables d'assurer de déplacement des tiges d'étirage avec une régularité suffisante, celles-ci sont en général actionnées mécaniquement, par exemple à l'intervention de cames. Des dispositifs de ce type sont décrits dans les documents FR—A—2304461 et FR—A—2098332.

Par ailleurs, dans le document DE—A—2704657, on décrit un dispositif de soufflage de corps creux orientés dans lequel il est fait appel à des tuyères de soufflage équipées d'une gorge annulaire dans laquelle des billes de rétention peuvent être insérées par des ressorts de poussée. Ce mécanisme a pour fonction de favoriser le centrage en hauteur de la tuyère de soufflage dans le moule et de permettre un découplage rapide de la tuyère lors de son retrait du moule. Dans le document FR—A—2323516, on décrit une tuyère de soufflage à embout téléscopique rappelé par un ressort, ce montage ayant pour seul but de limiter le déplacement de l'embout et d'empêcher ainsi que celui-ci ne puisse appliquer les parois de l'ébauche contre la paroi de la cavité du moule.

L'emploi de tiges d'étirage actionnées mécaniquement présente un inconvénient très sérieux. En effet, il arrive fréquemment que, lors de leur déplacement obligé, les tiges d'étirage exercent un effort de poussée trop élevé sur les fonds des préformes et les perforent. Un tel incident peut se produire, par exemple, lorsque pour une raison quelconque, une préforme se trouve à une température inférieure, même légèrement, à la température prévue pour l'étirage. Dans un tel cas, la préforme n'est pas soufflée lors de l'introduction du fluide d'expansion et elle reste habituellement accrochée dans le moule ou à la tuyère de soufflage lors de l'ouverture du moule. Il faut dès lors prévoir la présence continuelle d'un opérateur pour éliminer manuellement les préformes perforées afin de libérer les moules de soufflage.

La présente invention a pour but de remédier à cet inconvénient des dispositifs connus. L'invention, telle qu'elle est caractérisée dans les revendications, vise en effet à créer un dispositif pour l'étirage à chaud longitudinal de préformes en matière thermoplastique lors de leur moulage par soufflage, ces préformes présentant un fond fermé et un col ouvert et ce dispositif comprenant une tige d'étirage longitudinal actionnée mécaniquement qui se dérobe lorsque la poussée exercée sur le fond des préformes dépasse une valeur prédéterminée de manière à empêcher de façon sûre la perforation du fond des préformes lors de leur étirage.

Le dispositif, objet de l'invention, comprend une tige d'étirage longitudinal, disposée de façon à exercer une poussée axiale sur le fond des préformes et actionnée mécaniquement qui est pourvue d'encoches et est actionnée par un manchon d'entraînement dans lequel elle peut coulisser et avec lequel elle est solidarisée au moyen de cales rétractables venant se loger dans les encoches.

Selon un mode re réalisation préféré du dispositif conforme à l'invention, les cales sont déplaçables suivant une direction perpendiculaire à l'axe de la tige d'étirage. Les encoches ménagées sur la tige d'étirage et les cales rétractables sont profilées de manière que la réaction à l'effort de poussée transmis par les cales rétractables tende à extraire celles-ci hors des encoches, les cales rétractables étant maintenues en place au moyen de ressorts tarés.

Selon une variante préférée de ce mode de réalisation, les encoches ménagées sur la tige d'étirage comprennent une surface oblique par rapport à l'axe de la tige d'étirage sur laquelle viennent s'appuyer des cales rétractables constituées par des galets qui sont maintenus en place par des poussoirs et des ressorts tarés.

Le dispositif conforme à l'invention est, par ailleurs, explicité plus en détail à l'aide de dessins dans la description qui va suivre d'un mode de réalisation préféré qui est donnée à titre illustratif.

La figure 1 est une vue en coupe et en élévation d'une unité de moulage comportant un dispositif conforme à l'invention.

La figure 2 est une vue schématique montrant un cycle de moulage normal.

La figure 3 est une vue schématique montrant un cycle de moulage lorsque la poussée exercée par la tige d'étirage dépasse une valeur limite prédéterminée.

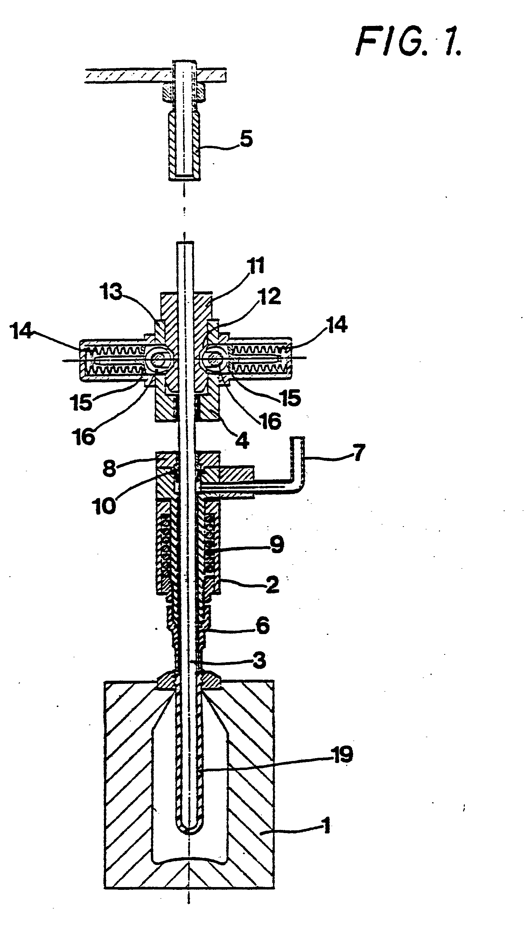

L'unité de moulage illustrée (figure 1) fait partie d'un appareillage de moulage par soufflage comportant une série de pareilles unités, montées radialement sur un support, non représenté, qui est de préférence rotatif. Chaque unité de moulage comporte un moule de soufflage 1, un dispositif de soufflage 2, une tige d'étirage longitudinal 3, un manchon d'entraînement 4 de la tige d'étirage, et un butée 5.

La moule de soufflage 1 est du type classique et est généralement constitué par deux demi-moules complémentaires.

Le dispositif de soufflage 2 est également de type classique, mis à part le fait que la tige d'étirage 3, qui lui est coaxiale, peut coulisser librement au travers de celui-ci. Le dispositif de soufflage comporte une tuyère de soufflage 6, un conduit 7 d'amenée du fluide d'expansion, un boîter 8 de répartition du fluide d'expansion, un dispositif à ressort 9 appliquant étroitement la tuyère de soufflage 6 contre l'embouchure du moule de soufflage 1 lors du moulage par soufflage des préformes, et un dispositif d'étanchéité 10 empêchant les pertes de fluide d'expansion entre le boîtier de répartition 8 et la tige d'étirage 3.

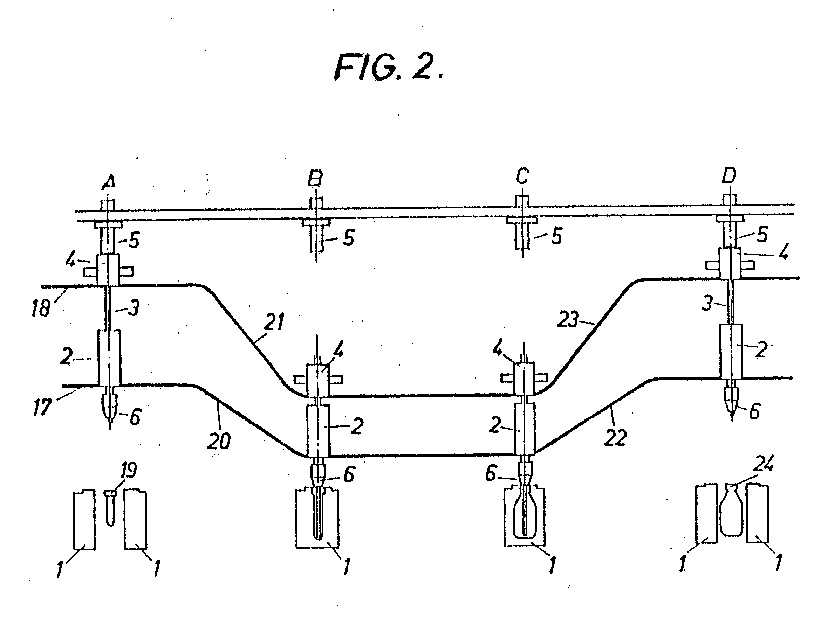

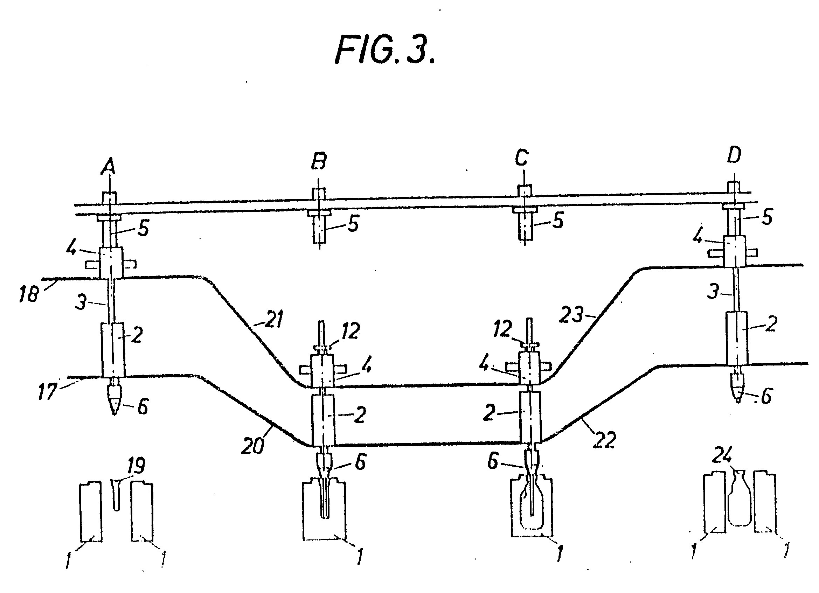

Le dispositif de soufflage est commandé par une came profilée 17 (figures 2 et 3) qui amène ce dispositif en contact étroit avec l'embouchure du moule 1 lorsque ce dernier est fermé et contient une préforme 19 à mouler par soufflage et qui écarte ce dispositif de l'embouchure du moule 1 après l'opération de moulage par soufflage.

L'extrémité de la tige d'étirage 3 qui exerce l'effort de poussée sur le fond des préformes est profilée de façon à minimiser tout risque d'endommagement du fond des préformes; cette extrémité est donc dépourvue d'angles vifs. Lorsque l'étirage longitudinal des préformes est effectué avant le soufflage final, il peut être avantageux de prévoir un léger présoufflage des préformes durant leur étirage de façon à éviter tout collage des préformes contre cette tige. Il peut également être avantageux, lors du soufflage final, d'introduire le fluide d'expansion à une distance du fond des préformes comprise entre 20 et 60% de leur longueur soumise à l'expansion, cette introduction se faisant en direction du fond des préformes.

Le manchon d'entraînement 4 (figure 1) de la tige d'étirage 3 enserre la tige d'étirage 3 proprement dite ainsi qu'un manchon de commande 11 calé sur l'extrémité menante de la tige d'étirage 3, c'est ce manchon de commande qui comporte des encoches 12 dont le profil a la forme d'un M aplati. Le manchon de commande 11 qui est tout à fait solidaire de la tige d'étirage 3 peut coulisser dans la partie cylindrique 13 du manchon d'entraînement 4. Celui-ci est équipé de ressorts tarés 14 et de poussoirs 15 agissant sur des galets 16 appliqués par ces ressorts 14 contre le creux des encoches 12 du manchon de commande 11. Le manchon d'entraînement 4 est actionné par une came profilée de commande 18 (figures 2 et 3) qui régit ses déplacements.

La butée 5 est constituée par un tube creux dans lequel peut s'insérer l'extrémité menante de la tige d'étirage 3 et contre l'extrémité duquel peut venir buter le manchon de commande 11 calé sur cette tige d'étirage 3. La butée 5, qui peut être réglable accompagne l'unité de moulage dans ses déplacements.

Dans un tel dispositif, lorsque la came de commande 18 impose un déplacement au manchon d'entraînement 4, ce dernier entraîne la tige d'étirage 3 par l'intermédiaire des poussoirs 15 à galets 16 appliqués, par les ressorts 14, contre le creux des encoches 12 du manchon de commande 11 calé sur la tige 3. Lorsque, pour une raison quelconque, la poussée appliquée à la tige d'étirage dépasse une certaine valeur limite conditionnée à la fois par la puissance des ressorts tarés 14 et par l'angle de pente de la surface oblique des encoches du manchon de commande 11, les poussoirs 15 à galet 16 sont repoussés et la tige d'étirage 3 n'est plus entraînée.

Il apparaît donc qu'en choisissant judicieusement les angles de la surface oblique des encoches 12 du manchon de commande 11 ainsi que la puissance des ressorts tarés 14 agissant sur les poussoirs 15 à galet 16, il est possible de régler avec précision l'effort maximum de poussée qui peut être transmis à la tige d'étirage 3. On peut, par ailleurs, prévoir des vis de réglage ou des moyens similaires pour régler la pression exercée par les ressorts tarés sur les poussoirs 15 à galet 16.

La came de commande 18 du manchon d'entraînement 4 peut être profilée de façon telle que l'étirage longitudinal des préformes est effectué avant ou durant le moulage par soufflage final.

Il va de soi que durant la phase d'étirage longitudinal, la préforme 19 doit être maintenue par son col ouvert. Un moyen très simple pour obtenir ce résultat consiste à introduire la préforme 19 dans le moule de soufflage final 1 avant de procéder à son étirage longitudinal et de la maintenir par son col, durant cet étirage, per l'intermédiaire du moule 1 en collaboration éventuelle avec la tuyère de soufflage 6. Un autre moyen consisterait à maintenir la préforme par un moule de col approprié durant cet étirage, ce dernier pouvant être effectué dans ou à l'extérieur du moule de soufflage final.

La came de commande 18 du manchon d'entraînement 4 peut, en outre, être conçue de façon à ramener ce manchon dans sa position initiale après les opérations d'étirage et de soufflage final de façon telle que la tige d'étirage 3 soit ramenée en position de départ pour un nouveau cycle. La butée 5 peut servir à bloquer l'extrémité menante de la tige d'étirage 3 lors de sa remontée. Par ailleurs, elle réintroduit correctement le manchon de commande 11 de la tige d'étirage 3 dans le manchon d'entraînement 4 dans le cas où ce dernier est sorti de celui-ci du fait d'un dépassement accidentel de la valeur limite prédéterminée de l'effort de poussée exercé par la tige d'étirage 3.

Dans le cas d'un fonctionnement normal (figure 2), dans la position A (début d'un cycle d'étirage et de soufflage), le dispositif de soufflage 2 et le manchon d'entraînement 4 de la tige d'étirage 3 sont maintenus, par l'intermédiaire des cames profilées 17 et 18, en retrait du moule 1 qui se referme sur une préforme 19 à mouler, la fermeture du moule étant complète au moment où l'unité de moulage aborde les parties inclinées 20 et 21 du profilage des cames 17 et 18.

Dès ce moment, le dispositif de soufflage 2 se rapproche progressivement du moule 1 fermé et la tuyère 6 est appliquée sur l'embouchure du moule 1 lorsque l'unité de moulage atteint la fin des parties inclinées 20 et 21 du profilage des cames 17 et 18. Simultanément, grâce à la came 18 dont le profilage 21 est plus accentué que celui de la came 17, le manchon d'entraînement 4 se rapproche du dispositif de soufflage 2, ce qui provoque le coulissement de la tige d'étirage 3 au travers du dispositif de soufflage 2 et partant l'étirage longitudinal de la préforme 19 enfermée dans le moule 1. Le profilage de la section 21 de la came 18 est conçu de façon telle que, lorsque l'unité de moulage atteint la position B, l'étirage longitudinal souhaité pour les préformes 19 est atteint.

En position B, la tuyère de soufflage 6 est appliquée contre l'embouchure du moule 1 et la préforme 19 est étirée longitudinalement jusqu'à la longueur désirée.

Le moulage par soufflage de la préforme étirée est ensuite effectué tandis que l'unité de moulage progresse entre la position B et la position C, la tuyère de soufflage étant maintenue contre l'embouchure du moule 1. Il est naturellement possible de modifier le profilage des cames 17 et 18 de façon à réaliser simultanément l'étirage longitudinal et le soufflage de la préforme 19.

Lorsque l'unité de moulage atteint la position C, le soufflage de la préforme et la réfrigération du corps creux ainsi moulé sont terminés.

A ce moment, l'unité de moulage aborde les parties inclinées 22 et 23 des cames 17 et 18. Le profilage 23 entraîne le retrait progressif de la tige d'étirage 3 et le profilage 22 entraîne le retrait du dispositif de soufflage 2 par rapport au moule 1. Lorsque l'unité de moulage atteint l'extrémité des profilages 22 et 23 des cames 17 et 18, le manchon de commande 11 de la tige d'étirage vient buter contre la butée 5 et le dispositif de soufflage 2 ainsi que le manchon d'entraînement 4 de la tige d'étirage 3 ont repris leur position initiale ainsi qu'il est montré à la position D.

Par ailleurs, durant le passage de l'unité de moulage entre les positions C et D, le moule 1 est ouvert progressivement et le corps creux moulé 24 est évacué du moule.

Dans le cas d'un fonctionnement anormal (figure 3), c'est-à-dire lorsque la poussée exercée par la tige d'étirage 3 sur le fond de la préforme 19 dépasse la valeur limite prédéterminée, le cycle de fonctionnement est analogue à celui qui vient d'être décrit mis à part les différences suivantes.

Lorsque l'unité de moulage passe de la position A à la position B et au moment où l'effort de poussée exercé par la tige d'étirage longitudinal 3 sur le fond de la préforme 19 atteint la valeur limite qui est prédéterminée, les galets 16 des poussoirs 15 sont repoussés contre l'action des ressorts 14 et le manchon d'entraînement 4 n'entraîne plus la tige d'étirage longitudinal 3 via le manchon de commande 11. En d'autres termes, le manchon d'entraînement 4 provoque, via le manchon de commande 11, la descente de la tige d'étirage longitudinal 3 dans la préforme 19 jusqu'au moment où l'effort de poussée exercé par cette tige d'étirage 3 atteint la valeur prédéterminée et, à ce moment, le manchon d'entraînement cesse d'entraîner la tige d'étirage 3 du fait d'un mouvement relatif entre le manchon d'entraînement 13 et le manchon de commande 11.

Ainsi qu'il apparaît dans la position B de la figure 3, le manchon de commande 11 s'extirpe, dans ce cas, de la partie cylindrique 13 du manchon d'entraînement 4 et la préforme n'est plus étirée axialement.

Toutefois, même dans ce cas de fonctionnement anormal lors de l'étirage, le moulage par soufflage se déroule normalement et la préforme est donc soufflée pour donner un corps creux qui se démoule normalement.

Par ailleurs, lors du passage de l'unité de moulage entre les positions C et D, le manchon de commande 11 vient buter contre la butée 5 au cours de la remontée du boîter d'entraînement 13 sous l'effet du profilage 23 de la came 18. Cette butée retient la tige d'étirage 3 et force le manchon de commande 11 dans le manchon d'entraînement 4 de telle sorte que tous les éléments du dispositif ont repris leur position initiale lorsque l'unité de moulage se trouve en position D et un nouveau cycle de moulage peut être entrepris.

Dans les figures 2 et 3, les unités de moulage sont, par souci de clarté, représentées comme si celles-ci se déplaçaient dans un plan mais il est bien évident que dans le cas d'un appareillage rotatif, les unités de moulage peuvent suivre une trajectoire circulaire.

Par ailleurs, il paraît bien évident que l'effort maximum de poussée qui peut être exercé par les tiges d'étirage longitudinal 3 peut être réglé avec une grande précision en agissant soit sur la puissance des ressorts tarés 14 soit sur le profilage des encoches 12 du manchon de commande 11.

Le dispositif conforme à l'invention convient particulièrement bien pour la production de corps creux biorientés moléculairement: il suffit de mettre en oeuvre des préformes conditionnées thermiquement à une température induisant, lors de l'étirage, des tensions d'orientation moléculaire dans leur matériau constitutif. Les préformes utilisées, dans ce cas, pouvant avantageusement être pourvues d'un fond fermé hémisphérique ainsi qu'il est décrit dans le brevet belge 826 676 déposé le 14.3.1975 par la Demanderesse. Dans ce cas, l'extrémité de la tige d'étirage entrant en contact avec le fond des préformes est avantageusement de forme hémisphérique.

**Revendications**

1. Dispositif pour l'étirage à chaud longitudinal de préformes en matière thermoplastique lors de leur moulage par soufflage ces préformes présentant un fond fermé et un col ouvert et ledit dispositif comprenant une tige (3) d'étirage longitudinal actionnée mécaniquement de façon à exercer en bout une poussée axiale sur le fond des préformes caractérisé en ce que la tige (3) est pourvue d'encoches et est actionnée par un manchon (4) d'entraînement dont le déplacement axial est imposé par des moyens de commande (18), en ce que la tige (3) est emmanchée coulissante dans le manchon (4) et solidarisée axialement avec lui au moyen de cales (16) rétractables venant se loger dans les encoches (12) et assurant la transmission axiale de l'effort d'entraînement du manchon (4) à la tige (3), en ce que les encoches (12) et les cales (16) sont profilées de telle sorte que la réaction à l'effort de poussée tende à extraire lesdits cales des encoches et en ce que les cales sont maintenues en place au moyen d'organes de maintien tarés (14).

2. Dispositif selon la revendication 1, caractérisé en ce que les cales (16) sont déplaçables selon une direction perpendiculaire à l'axe de la tige (3).

3. Dispositif selon la revendication 1 ou 2, caractérisé en ce que les encoches (12) comprennent une surface oblique par rapport à l'axe de la tige (3) sur laquelle viennent s'appuyer les cales (16) de manière à désolidariser le manchon (4) de la tige d'étirage (3) lorsque l'effort exercé par la tige d'étirage (3) dépasse une valeur prédéterminée.

4. Dispositif selon l'une quelconque des revendications 1 à 3, caractérisé en ce que les cales (16) sont constituées par des galets.

**Patentansprüche**

1. Vorrichtung zum Warm-Längsziehen von Vorformlingen aus thermoplastischem Material bei deren Blasformung, wobei die Vorformlinge einen geschlossenen Boden und einen offenen Hals aufweisen, mit einer langgestreckten Ziehstange (3), die mechanisch betätigbar ist, um endseitig einen Axialdruck auf den Boden der Vorformlinge auszuüben, dadurch gekennzeichnet, dass die Stange (3) mit Ausnehmungen versehen und mittels einer Antriebsmuffe (4) betätigbar ist, der eine Axialbewegung durch eine Steuereinrichtung (18) erteilt wird, dass die Stange (3) in der Muffe (4) gleitverschieblich angeordnet und in axialer Richtung mit dieser über ausrückbare Rastkörper (16) verbunden ist, die in die Ausnehmungen (12) eingreifen und die axiale Übertragung der Antriebskraft der Muffe (4) auf die Ziehstange (3) sichern, dass die Ausnehmungen (12) und die Rastkörper (16) so profiliert sind, das die Reaktion der Druckkraft bestrebt ist, die Rastkörper aus den Ausnehmungen zu bewegen, und dass die Rastkörper mittels vorgespannter Halterorgane (14) an ihrem Platz gehalten sind.

2. Vorrichtung nach Anspruch 1, dadurch gekennzeichnet, dass die Rastkörper (16) in Richtung senkrecht zur Achse der Stange (3) verlagerbar sind.

3. Vorrichtung nach Anspruch 1 oder 2, dadurch gekennzeichnet, dass die Ausnehmungen (12) eine zur Achse der Stange (3) schräge Fläche aufweisen, auf welcher die Rastkörper (16) zur Anlage gelangen, derart, dass die Muffe (4) von der Ziehstange (3) gelöst wird, wenn die von der Ziehstange (3) ausgeübte Kraft einen vorbenstimmten Wert übersteigt.

4. Vorrichtung nach einem der Ansprüche 1 bis 3, dadurch gekennzeichnet, dass die Rastkörper (16) durch Rollen gebildet sind.

**Claims**

1. Device for the longitudinal hot drawing of thermoplastic preforms during the blow moulding thereof, these preforms having a closed base and an open neck, and the said device comprising a rod (3) for longitudinal drawing, which is mechanically actuated so that its end exerts an axial thrust on the base of the preforms, characterised in that the rod (3) is provided with slots and is actuated by means of a driving sleeve (4), the axial displacement of which is imparted by control means (18), in that the rod (3) is fitted to slide in the sleeve (4) and rendered axially integral therewith by means of retractable wedges (16) housed in the slots (12) and providing the axial transmission of the driving force from the sleeve (4) to the rod (3), in that the slots (12) and the wedges (16) are profiled in such a way that the reaction to the thrust tends to pull the said wedges out of the slots, and in that the wedges are kept in place by means of calibrated retaining members (14).

2. Device according to Claim 1, characterised in that the wedges (16) can be displaced in a direction perpendicular to the axis of the rod (3).

3. Device according to Claim 1 or 2, characterised in that the slots (12) possess a surface which is oblique relative to the axis of the rod (3), on which the wedges (16) bear so as to separate the sleeve (4) from the drawing rod (3) when the force exerted by the drawing rod (3) exceeds a predetermined value.

4. Device according to any one of Claims 1 to 3, characterised in that the wedges (16) consist of rollers.

FIG. 1.

FIG. 2.

0 008 481

FIG.3.

0 008 481